# FASCICULE DE BREVET EUROPEEN

(11) **EP 1 691 056 B1**
(45) Date de publication et mention de la délivrance du brevet: **10.09.2008**
(21) Numéro de dépôt: 06100612.8
(22) Date de dépôt: 19.01.2006
(51) Int. Cl.: F02C 7/36

(54) **Turbomoteur à double corps avec des moyens d'entraînement du boîtier d'accessoires**
Zweikreistriebwerk mit Antriebsmitteln für das Getriebe
Bypass turbofan engine with means to drive the gearbox

(30) Priorité: 20.01.2005 FR 0550182
(43) Date de publication de la demande: 16.08.2006
(73) Titulaire: SNECMA, 75015 Paris (FR)
(72) Inventeur: Fert, Jérémy, 75012, Paris (FR); Beutin, Bruno, 91000, Evry (FR)
(74) Mandataire: David, Daniel

(56) Documents cités:
- FR-A- 2 520 806
- FR-A- 2 606 077
- GB-A- 839 961

## Description

L'invention concerne un turbomoteur à double corps avec des moyens d'entraînement du boîtier d'accessoires.

Une partie de la puissance générée par un turbomoteur aéronautique est utilisée pour alimenter différents organes, à la fois du turbomoteur mais aussi de l'aéronef dont le turbomoteur participe à la propulsion.

Une partie de cette puissance est actuellement prélevée au niveau du compresseur haute pression, dont l'air comprimé est utilisé, notamment pour assurer la pressurisation et le conditionnement de la cabine de l'aéronef, ou encore le dégivrage. Une autre partie de cette puissance est prélevée mécaniquement sur l'arbre du corps haute pression (HP) du turbomoteur, pour entraîner l'arbre d'entrée d'un boîtier d'accessoires. Cet arbre d'entrée est entraîné en rotation par un arbre de transmission s'étendant dans un bras structural du carter et lui-même entraîné par un pignon solidaire de l'arbre HP.

Le boîtier d'accessoires, bien connu de l'homme du métier sous sa dénomination anglaise "Accessory Gear Box" (AGB), comporte différentes machines, ou accessoires, par exemple un générateur électrique, un starter, un alternateur, des pompes hydraulique, à carburant ou à huile, ... Ces divers accessoires sont entraînés mécaniquement par la puissance prélevée sur l'arbre HP comme on vient de le voir.

La tendance actuelle vise à augmenter la part du prélèvement de puissance mécanique en raison du rôle croissant des moyens électriques, réputés plus souples d'emploi au niveau de l'avion.

Cependant, un prélèvement de puissance mécanique trop élevé a un effet négatif sur le fonctionnement du corps HP, car il est susceptible de provoquer le pompage du compresseur, en particulier quand le moteur fonctionne à bas régime.

L'art antérieur enseigne de prélever une partie de la puissance mécanique sur le corps basse pression (BP). Diverses solutions sont envisagées. Le document FR 2, 606, 077 propose de relier directement les rotors du turbomoteur aux deux entrées d'un différentiel placé à leur proximité. Un tel agencement n'est toutefois pas toujours possible, du fait de l'encombrement que ce placement entraîne dans le coeur du turboréacteur. Le document GB 973, 388 décrit, pour une turbine industrielle, l'entraînement du boîtier d'accessoires, situé sur le carter extérieur de la turbine, par des prises de mouvement sur l'arbre HP et l'arbre BP ; toutefois, les prises de mouvement sur chacun des arbres sont reliées au boîtier d'accessoires par des engrenages volumineux. Cela n'est pas possible dans un turbomoteur moderne dans lequel ces engrenages doivent passer par les bras structuraux du carter. Par ailleurs, le document US 4, 776, 163 décrit un turboréacteur dans lequel les arbres HP et BP peuvent alternativement entraîner le boîtier d'accessoires. Outre le fait que les puissances de ces deux arbres ne sont pas couplées, cette forme de réalisation présente l'inconvénient de faire passer les deux arbres de transmission de puissance concentriquement l'un à l'autre, ce qui n'est pas toujours possible si d'autres éléments, tels des servitudes, doivent passer dans le bras. Les servitudes s'entendent de canalisations de transport de fluide ou de câbles électriques d'acheminement d'énergie ou d'information (sonde de vitesse par exemple).

La demanderesse a déposé la demande de brevet français n° FR 03 14 429 concernant un turbomoteur à double corps dont le boîtier d'accessoires est entraîné par les arbres BP et HP, reliés par des bras de transmission, passant chacun dans un bras structural et connectés aux deux entrées d'un différentiel relié en sortie à l'arbre d'entraînement du boîtier d'accessoires.

L'invention vise à proposer un turbomoteur à double corps dans lequel le prélèvement de puissance mécanique est effectué sur les arbres HP et BP, la transmission de puissance se faisant de manière à minimiser l'encombrement et à obtenir l'entraînement de l'arbre d'entrée du boîtier d'accessoires à partir d'un différentiel couplant la puissance de l'arbre BP et la puissance de l'arbre HP. Le problème s'est particulièrement posé pour un turbomoteur de grande taille, cette dernière autorisant l'installation du boîtier d'accessoires autour du carter externe du compresseur, en aval du carter de soufflante ; une telle installation permet d'améliorer le profil aérodynamique de la nacelle qui enveloppe le moteur et génère un gain en terme de masse au niveau de la nacelle. Dans ce cas, les arbres de transmission de puissance s'étendent dans les bras structuraux et en ressortent par renvoi d'angle au niveau du carter de compresseur, sur lequel est monté le boîtier d'accessoires. Dans un tel turbomoteur, il est souhaitable que les arbres de transmission s'étendent dans des bras structuraux différents successifs, afin de minimiser l'encombrement dans chaque bras. Il faut alors s'assurer que la prise de mouvement sur l'arbre HP n'interfère pas avec la prise du mouvement sur l'arbre BP, et ce bien que la taille des pignons de prise de mouvement soit de toutes façons comprise dans une fourchette très réduite, en raison de la taille minimale d'un pignon, imposée par les règles du métier, et de l'espace disponible. Il n'est donc pas possible de prévoir une augmentation notable de la vitesse de transmission du mouvement à ce niveau. En outre, le volume du dispositif doit être minimal en raison du fort encombrement de cette zone du carter et de l'intérieur des bras. La véritable adaptation du rapport de transmission, en vue de l'adaptation de la vitesse du mouvement au régime requis en entrée du différentiel, ne peut donc commencer qu'au niveau du renvoi d'angle, qui est lui-même situé dans une zone très encombrée.

Il va de soi que la portée de la demande s'étend à tout turbomoteur.

C'est ainsi que l'invention concerne un turbomoteur à double corps, comportant un rotor haute pression et un rotor basse pression, au moins un boîtier d'accessoires entraîné par des moyens de transmission mécanique, des moyens de prise de mouvement sur chaque rotor, entraînant des moyens de transmission de mouvement associés chacun avec une entrée d'un différentiel, dont la sortie entraîne un arbre d'entraînement du boîtier d'accessoires, caractérisé par le fait que les moyens de transmission de mouvement s'étendent dans deux bras structuraux différents, les moyens de transmission de mouvement de l'un des rotors étant connectés à un boîtier de transfert de mouvement remplissant une double fonction, de transmission de mouvement vers une entrée du différentiel et de modification de la vitesse du mouvement.

Grâce à l'invention, les moyens de transmission de mouvement s'étendent dans des bras structuraux différents, ce qui permet de réduire l'encombrement engendré dans les bras et donc les autoriser à guider d'autres éléments, tels des servitudes. Par ailleurs, les puissances des rotors sont couplées au niveau du différentiel, ce qui améliore le rendement de l'entraînement du boîtier d'accessoires. L'utilisation d'une boîte de transfert permet de répartir, depuis le rotor jusqu'à l'entrée du différentiel, l'augmentation de la vitesse du mouvement afin de rendre celle-ci compatible avec l'entrée requise pour le différentiel, tout en minimisant l'encombrement du dispositif de transmission de puissance, depuis les rotors HP et BP jusqu'au boîtier d'accessoires.

L'invention sera mieux comprise à l'aide de la description suivante de la forme de réalisation préférée du turbomoteur de l'invention, en référence à la planche annexée, sur laquelle :
- la figure 1 est une représentation schématique fonctionnelle du dispositif de transmission de puissance du turbomoteur de l'invention, depuis les rotors HP et BP jusqu'au boîtier d'accessoires et
- la figure 2 est une vue schématique en perspective du dispositif de la figure 1.

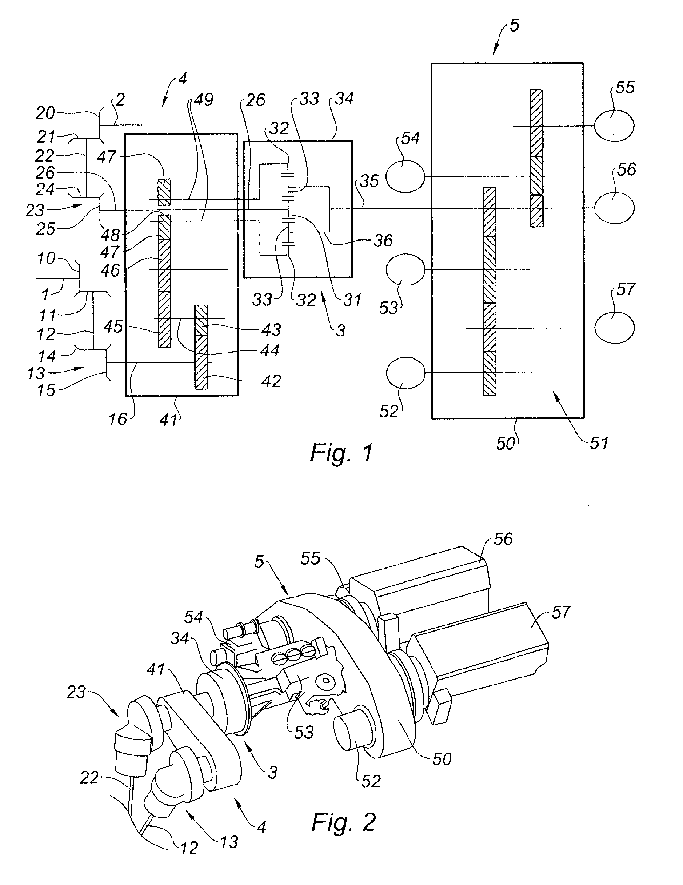

Les figures 1 et 2 représentent toutes deux quasiment l'ensemble du dispositif de transmission de puissance, depuis les rotors HP et BP jusqu'au boîtier d'accessoires, les autres éléments du turbomoteur n'ayant pas été représentés car ils sont bien connus de l'homme du métier.

En référence à ces figures 1 et 2, le turbomoteur de l'invention est un turbomoteur à double corps, comportant un rotor basse pression (BP) 1 et un rotor haute pression (HP) 2. Ce type de turbomoteur est bien connu de l'homme du métier. Il peut s'agir d'un turboréacteur ou d'un turbopropulseur, par exemple. Il s'agit en fait de tout turbomoteur comportant un compresseur et une turbine, double corps, avec un corps basse pression et un corps haute pression. Chacun des rotors 1, 2 comporte, à sa périphérie, longitudinalement environ au niveau des bras structuraux du carter intermédiaire du turbomoteur, un pignon conique 10, 20, respectivement. Le pignon 20 du rotor HP 2 se situe au niveau de l'extrémité amont de ce dernier, le pignon 10 du rotor BP 1 se situant juste en amont de cette extrémité. Le carter intermédiaire est un carter structural, dont une enveloppe externe se situe dans le prolongement et en aval du carter de soufflante, comportant des bras structuraux et qui est notamment le carter auquel est fixé le mât de liaison amont à l'aéronef destiné à être propulsé par le turbomoteur.

Chaque pignon conique 10, 20 engrène avec un deuxième pignon conique 11, 21, respectivement, permettant un renvoi d'angle à 90°. En fonction de l'encombrement au niveau de ces pignons (10, 11), (20, 21) ainsi que de leur écartement angulaire et radial l'un de l'autre, une première augmentation de la vitesse du mouvement, par différence de leur nombre de dents, peut être prévue au niveau de chaque paire de pignons (10, 11), (20, 21) de prise de mouvement. Chaque deuxième pignon conique 11, 21 est solidaire d'un arbre de transmission 12, 22, qui s'étend radialement vers l'extérieur du turbomoteur dans un bras structural du carter intermédiaire. Les arbres 12, 22 s'étendent ici dans deux bras structuraux successifs du carter intermédiaire. A son extrémité radiale externe, chacun de ces bras de transmission 12, 22 est connecté à un boîtier 13, 23 de renvoi d'angle, respectivement. En l'espèce, chacun de ces boîtiers 13, 23 comporte un pignon conique 14, 24, solidaire du bras de transmission 12, 22, qui engrène avec un deuxième pignon conique 15, 25 permettant son renvoi d'angle, ici à 90°. De nouveau, une nouvelle augmentation de la vitesse du mouvement peut être prévue au niveau de la paire de pignons (14, 24), (15, 25) de chaque boîtier de renvoi d'angle 13, 23.

Le deuxième pignon conique 25 du boîtier de renvoi d'angle 23 du rotor HP 2 est solidaire d'un arbre 26, qui est le premier arbre d'entrée d'un différentiel 3. Un différentiel 3 s'entend d'un engrenage mécanique dont la fonction est de relier deux arbres d'entrée et un arbre de sortie entraîné par les arbres d'entrée. Un tel engrenage comprend généralement, et en l'occurrence ici, un planétaire 31, une cage 32 et des satellites 33, chacun de ces éléments 31, 32, 33 remplissant la fonction, soit d'une entrée, soit de la sortie. L'ensemble est contenu dans un carter 34. En l'espèce, le premier arbre d'entrée 26 est directement emmanché dans le planétaire 31 du différentiel 3.

Le pignon conique 15 du boîtier de renvoi d'angle 13 du rotor BP 1 est solidaire d'un arbre 16, qui est l'arbre d'entrée d'un boîtier 4 de transfert de mouvement. Ce boîtier 4 remplit une double fonction, de transmission de mouvement vers l'autre entrée du différentiel 3 et de modification de la vitesse du mouvement. Il s'agit ici d'une augmentation de la vitesse du mouvement. Le boîtier de transfert de mouvement 4 comporte un carter 41, dans lequel sont agencés ses divers éléments constitutifs. Dans le cas d'espèce considéré, l'arbre d'entrée 16 du boîtier de transfert de mouvement 4 comporte, à son extrémité contenue dans ce boîtier 4, un pignon droit 42, qui engrène avec un pignon droit 43 comportant moins de dent que lui, lui-même solidaire d'un arbre 44 qui comporte à son extrémité un pignon droit 45 comportant plus de dents que lui, qui engrène avec un pignon droit 46 comportant moins de dents que lui. Depuis l'arbre d'entrée 16 du boîtier 4 jusqu'à ce pignon droit 46, il y a donc bien augmentation de la vitesse du mouvement, c'est-à-dire ici augmentation de la vitesse de rotation des arbres. Ce pignon droit 46 engrène avec un dernier pignon 47, comportant sensiblement le même nombre de dents que lui, dont une fonction est de changer le sens de rotation de l'engrenage à cet endroit. Ce dernier pignon 47 comporte un alésage central 48 au travers duquel s'étend le premier arbre d'entrée 26 du différentiel 3, concentriquement à un deuxième arbre d'entrée 49 du différentiel 3, tubulaire, solidaire du dernier pignon 47, s'étendant à partir de ce dernier vers l'aval du turbomoteur. Une autre fonction du dernier pignon 47 est, grâce à un bon dimensionnement, d'assurer la co-axialité des deux arbres d'entrée 26, 49 du différentiel 3. Le deuxième arbre d'entrée 49 du différentiel 3 est solidaire de la cage 32 de ce dernier. On note que les rotors BP 1 et HP 2 sont ici contrarotatifs mais que les arbres d'entrée 26, 49 du différentiel 3 sont co-rotatifs. L'invention s'applique à des rotors BP 1 et HP 2 co-rotatifs ; il suffit d'adapter le nombre de pignons du dispositif de transmission de mouvement.

Grâce à l'engrenage du boîtier de transfert de mouvement 4, combiné aux premières augmentations de la vitesse du mouvement qui se produisent au niveau des pignons 10, 11 de prise de mouvement au niveau de l'arbre BP 1 et au niveau des pignons 14, 15 du boîtier de renvoi d'angle 13, l'adaptation du régime de rotation de l'arbre BP 1 au régime requis en entrée du différentiel 3 se fait de manière progressive tout au long du dispositif de transmission de puissance, ce qui autorise l'utilisation de pignons qui ne soient pas de taille trop importante, l'augmentation de la vitesse du mouvement se faisant au fur et à mesure, par étapes. En l'espèce, le rapport du régime du deuxième arbre d'entrée 49 du différentiel 3 sur le régime de l'arbre BP 1 est égal à 4,35. Par ailleurs, le boîtier de transfert de mouvement 4 autorise l'acheminement du mouvement issu de l'arbre BP 1 vers le premier arbre d'entrée 26 du différentiel 3 et donc la co-axialité des deux entrées 26, 49 du différentiel 3.

L'arbre de sortie 35 du différentiel 3, coaxial avec les arbres d'entrée 26, 49, est solidaire d'une cage 36 solidaire de l'ensemble des satellites 33 du différentiel 3, en l'espèce au nombre de quatre. La vitesse de rotation de l'arbre de sortie 35 est fonction de la vitesse de rotation des arbres d'entrée 26, 49, fonction définie par la structure du différentiel 3. Le différentiel 3 et le dispositif de transmission de mouvement sont agencés de sorte que le régime de rotation de son arbre de sortie 35 soit le plus constant possible malgré les variations de régime du rotor BP 1 et du rotor HP 2.

L'arbre de sortie 35 du différentiel 3 forme l'arbre d'entrée du boîtier d'accessoires 5 du turbomoteur. Ce dernier comporte un carter 50, contenant des engrenages 51 reliés à son arbre d'entrée 35 et entraînant divers éléments, en l'espèce un alternateur 52, une pompe de lubrification 53, une pompe hydraulique 54, une pompe de carburant 55 et deux générateurs/starters 56, 57. Le boîtier d'accessoires 5 est bien connu de l'homme du métier et sa description ne sera pas détaillée plus avant.

Ainsi, grâce au dispositif de transmission de mouvement, et donc de puissance, de l'invention, il est possible d'entraîner le boîtier d'accessoires 5 en prélevant l'énergie mécanique sur les deux rotors BP 1 et HP 2 et en faisant passer les arbres de transmission de mouvement 12, 22 par des bras différents successifs du carter intermédiaire. Dans le cas d'espèce considéré, les boîtiers de renvoi d'angle 13, 23 sont agencés dans les bras au niveau du carter du compresseur, entre le carter interne du flux secondaire et le carter externe du flux primaire, le boîtier d'accessoires 5 étant monté sur ce dernier, mais il va de soi que l'invention s'applique à tout placement du boîtier d'accessoires 5, par exemple sur l'enveloppe externe du carter intermédiaire, dans le prolongement du carter de soufflante. Le boîtier de transfert de mouvement 4 permet de combler la distance entre les axes des arbres de sortie 16, 26 des boîtiers de renvoi d'angle 13, 23.

L'encombrement du dispositif de transmission de puissance est restreint, puisque l'augmentation de la vitesse du mouvement, en vue d'adapter le régime des rotors BP 1 et HP 2, se fait progressivement. C'est le rotor BP 1 qui est ici relié au boîtier de transfert 4, car sa vitesse de rotation, c'est-à-dire son régime, est plus faible que celle du rotor HP 2, ce qui en impose une plus grande augmentation. L'augmentation de la vitesse de rotation entre le rotor HP 2 et le différentiel 3 est juste effectuée au niveau des pignons 20, 21 de la prise de mouvement et des pignons 24, 25 du boîtier de transfert 4.

A titre d'information, le régime du rotor BP 1 d'un turbomoteur est généralement compris entre 650 et 6000 tours par minute, celui du rotor HP2 entre 8000 et 17000 tours par minute. Le régime du différentiel peut alors être compris entre 8500 et 21000 tours par minute. Ces vitesses sont données à titre indicatif. La plage de variation des vitesses en sortie du différentiel ne devrait pas excéder un rapport de 3 entre les régimes de ralenti et de plein gaz.

Les divers pignons du dispositif de transmission de puissance sont ici utilisés pour augmenter la vitesse de rotation des différents arbres, depuis les rotors 1, 2 jusqu'au différentiel 3, mais il va de soi que, si cela était nécessaire, ils pourraient être agencés pour la réduire, tout au long du dispositif ou juste sur certaines portions.

## Revendications

1. Turbomoteur à double corps, comportant un rotor haute pression (2) et un rotor basse pression (1), au moins un boîtier d'accessoires (5) entraîné par des moyens de transmission mécanique, des moyens ((10, 11), (20, 21)) de prise de mouvement sur chaque rotor (1, 2), entraînant des moyens (12, 22) de transmission de mouvement associés chacun avec une entrée (26, 49) d'un différentiel (3), dont la sortie (36) entraîne un arbre d'entraînement (35) du boîtier d'accessoires (5), **caractérisé par le fait que** les moyens de transmission de mouvement (12, 22) s'étendent dans deux bras structuraux différents, les moyens de transmission de mouvement (12) de l'un des rotors (1) étant connectés à un boîtier (4) de transfert de mouvement remplissant une double fonction, de transmission de mouvement vers une entrée (26) du différentiel (3) et de modification de la vitesse du mouvement.

2. Turbomoteur selon la revendication 1, dans lequel la modification de la vitesse du mouvement est une augmentation de vitesse.

3. Turbomoteur selon l'une des revendications 1 ou 2, dans lequel les moyens de transmission de mouvement connectés au boîtier de transfert (4) sont les moyens de transmission de mouvement (12) associés au rotor basse pression (1).

4. Turbomoteur selon l'une des revendications 1 à 3, dans lequel les entrées (26, 49) du différentiel (3) sont concentriques.

5. Turbomoteur selon les revendications 3 et 4, dans lequel les moyens de transmission de mouvement (22) associés au rotor haute pression (2) sont connectés à un boîtier (23) de renvoi d'angle dont l'arbre de sortie (26) forme un arbre (26) d'entrée du différentiel (3), les moyens de transmission de mouvement (12) associés au rotor basse pression (1) sont connectés à un boîtier (13) de renvoi d'angle dont l'arbre de sortie (16) forme l'arbre d'entrée du boîtier de transfert de mouvement (4), dont l'arbre (49) de sortie forme un deuxième arbre (49) d'entrée du différentiel (3), s'étendant concentriquement autour de l'autre arbre d'entrée (26) du différentiel (3).

6. Turbomoteur selon l'une des revendications 1 à 5, dans lequel le différentiel (3) comporte un planétaire (31), une cage (32) et des satellites (33), le planétaire (31) étant relié à une entrée (26) du différentiel (3), la cage (32) étant relié à l'autre entrée (49) du différentiel (3) et les satellites (33) étant reliés à l'arbre d'entrée (35) du boîtier d'accessoires (5).

## Claims

1. Twin turbo-shaft engine comprising a high pressure rotor (2) and a low pressure rotor (1), at least one accessory gearbox (5) driven by mechanical transmission means, main ((10, 11), (20, 21)) drive pinion means, on each rotor (1, 2), driving power transmission means (12, 22) each associated with an input (26, 49) to a differential (3), the output (36) of which drives a drive shaft (35) of the accessory gearbox (5), **characterised** wherein the power transmission means extend in two different structural arms, the power transmission means (12) of one (1) of the rotors being connected to a power transfer box (4) fulfilling two functions, firstly transmission of power to an input (26) to the differential (3), and secondly modification of the transmission speed.

2. Turbo-shaft engine according to claim 1, wherein modification of the transmission speed is a speed increase.

3. Turbo-shaft engine according to claim 1 or 2, wherein the power transmission means connected to the power transmission box (4) are the power transmission means (12) associated with the low pressure rotor (1).

4. Turbo-shaft engine according to claim 1 or 3, wherein inputs (26, 49) to the differential (3) are concentric.

5. Turbo-shaft engine according to claims 3 and 4, wherein the power transmission means (22) associated with the high pressure rotor are connected to a bevel gearbox (23), for which the output shaft (26) forms an input shaft to the differential (3), the power transmission means (12) associated with the low pressure rotor (1) are connected to a bevel gearbox (13) for which the output shaft (16) forms the input shaft to the power transfer box (4), for which the output shaft (49) forms a second input shaft (49) to the differential (3), extending concentrically around the other input shaft (26) to the differential (3).

6. Turbo-shaft engine according to any of the claims 1 to 5, wherein the differential (3) comprises a planet gear (31), a cage (32) and satellites (33), the planet gear (31) being connected to an input (26) to the differential (3), the cage (32) being connected to the other input (49) to the differential (3), and the satellites (33) being connected to the input shaft (35) to the accessory gearbox (5).

## Patentansprüche

1. Zweikreistriebwerk mit einem Hochdruckrotor (2) und einem Niederdruckrotor (1), wenigstens einem Hilfsgerätegetriebe (5), das durch mechanische Getriebemittel angetrieben wird, Mitteln ((10, 11), (20, 21)) zur Bewegungseinnahme an jedem Rotor (1, 2), die Mittel (12, 22) zur Bewegungsübertragung antreiben, die jeweils einem Eingang (26, 49) eines Differentials (3) zugeordnet sind, dessen Ausgang (36) eine Antriebswelle (35) des Hilfsgerätegetriebes (5) antreibt, **dadurch gekennzeichnet, daß** sich die Bewegungsübertragungsmittel (12, 22) in zwei verschiedenen Strukturarmen erstrecken, wobei die Bewegungsübertragungsmittel (12) eines der Rotoren (1) mit einem Bewegungsübertragungsgehäuse (4) verbunden sind, das eine doppelte Funktion erfüllt, Bewegungsübertraung zu einem Eingang (26) des Differentials (3) und Modifizierung der Geschwindigkeit der Bewegung.

2. Triebwerk nach Anspruch 1, bei welchem die Modifizierung der Geschwindigkeit der Bewegung eine Geschwindigkeitserhöhung ist.

3. Triebwerk nach einem der Ansprüche 1 oder 2, bei welchem die mit dem Übertragungsgehäuse (4) verbundenen Bewegungsübertragungsmittel Bewegungsübertragungsmittel (12) sind, die dem Niederdruckrotor (1) zugeordnet sind.

4. Triebwerk nach einem der Ansprüche 1 bis 3, bei welchem die Eingänge (26, 49) des Differentials (3) konzentrisch sind.

5. Triebwerk nach den Ansprüchen 3 und 4, bei welchem die dem Hochdruckrotor (2) zugeordneten Bewegungsübertragungsmittel (22) mit einem Gehäuse (23) zur Winkelrückstellung verbunden sind, dessen Ausgangswelle (26) eine Eingangswelle (26) des Differentials (3) bildet, die dem Niederdruckrotor (1) zugeordneten Bewegungsübertragungsmittel (12) mit einem Gehäuse (13) zur Winkelrückstellung verbunden sind, dessen Ausgangswelle (16) die Eingangswelle des Bewegungsübertratgungsgehäuses (4) bildet, dessen Ausgangswelle (49) eine zweite Eingangswelle (49) des Differentials (3) bildet, die sich konzentrisch um die andere Eingangswelle (26) des Differentials (3) erstreckt.

6. Triebwerk nach einem der Ansprüche 1 bis 5, bei welchem das Differential (3) ein Zentralrad (31), einen Käfig (32) und Planetenräder (33) aufweist, wobei das Zentralrad (31) mit einem Eingang (26) des Differentials (3) verbunden ist, wobei der Käfig (32) mit dem anderen Eingang (49) des Differentials (3) verbunden ist, und wobei die Planetenräder (33) mit der Eingangswelle (35) des Hilfsgerätegetriebes (5) verbunden sind.
